# EUROPÄISCHE PATENTSCHRIFT

(11) **EP 2 115 835 B1**
(45) Veröffentlichungstag und Bekanntmachung des Hinweises auf die Patenterteilung: **14.07.2010**
(21) Anmeldenummer: 08708645.0
(22) Anmeldetag: 04.02.2008
(51) Int. Cl.: H02B 13/045

(54) **KAPSELUNGSABSCHNITT EINER GASISOLIERTEN HOCHSPANNUNGSANLAGE**
ENCAPSULATION SECTION FOR A GAS-INSULATED HIGH-VOLTAGE SYSTEM
SEGMENT D'ENCAPSULATION D'UNE INSTALLATION À HAUTE TENSION À ISOLATION GAZEUSE

(30) Priorität: 06.02.2007 DE 102007006726
(43) Veröffentlichungstag der Anmeldung: 11.11.2009
(73) Patentinhaber: Siemens Aktiengesellschaft, 80333 München (DE)
(72) Erfinder: KLEINSCHMIDT, Andreas, 16515 Oranienburg (DE); RAUTENBERG, Steffen, 12161 Berlin (DE)
(86) Internationale Anmeldenummer: PCT/EP2008/051341
(87) Internationale Veröffentlichungsnummer: WO 2008/095895

(56) Entgegenhaltungen:
- DE-C1- 19 815 151
- DE-U1- 7 731 063

## Beschreibung

Die Erfindung betrifft einen Kapselungsabschnitt einer gasisolierten Hochspannungsanlage, die mindestens zwei entlang einer Achse nebeneinander angeordnete Kapselungsbausteine aufweist, wobei jeder Kapselungsbaustein mit je mindestens einem Anschlussflansch versehen ist, wobei zwischen zwei einander zugewandten Anschlussflanschen ein Ausgleichselement angeordnet ist und wobei zwischen den Anschlussflanschen ein axialkraftübertragendes Element angeordnet ist.

Ein gattungsgemäßer Kapselungsabschnitt ist aus der DE 198 15 151 Cl bekannt. Bei gekapselten und gasisolierten Hochspannungsanlagen muss zum Ausgleich von Wärmeausdehnungen zwischen den verschiedenen Teilen der Hochspannungsanlage eine Möglichkeit zum Verschieben in eine Achsrichtung vorgesehen werden. Ein bevorzugter Anwendungsfall sind dabei Sammelschienen von Hochspannungsschaltanlagen.

Die genannte Druckschrift zeigt eine Lösung, bei der ein Faltenbalg eingesetzt wird, der thermisch bedingte axiale Verschiebungen ausgleichen kann. Bekannt sind derartige Ausgleichselemente für thermische Spannungen auch unter der Bezeichnung Bördelkompensatoren.

Eine alternative Lösung stellt auf Schiebestücke ab, die zwischen zwei Kapselungsbausteinen eine relative Verschiebung zulassen und auf diese Weise thermisch bedingte Spannungen abbauen (sog. Schiebekompensatoren).

Der Erfindung liegt die Aufgabe zugrunde, eine Vorrichtung der eingangs genannten Art so fortzubilden, dass es möglich wird, mit geringerem Aufwand eine hinreichende Möglichkeit zum thermisch bedingten axialen Ausgleich zwischen zwei Kapselungsbausteinen zu schaffen. Die Vorrichtung soll dabei einfach aufgebaut sein, so dass sie preiswert hergestellt werden kann. Weiterhin soll sie einen möglichst geringen Bauraum einnehmen. Schließlich soll - was ebenfalls die Herstellkosten niedrig halten soll - die Montage der Anlage in einfacher Weise möglich sein.

Die Lösung dieser Aufgabe durch die Erfindung ist bei einem gattungsgemäßen Kapselungsabschnitt dadurch gekennzeichnet, dass das axialkraftübertragende Element eine Anzahl Zuganker und einen axial zwischen den Anschlussflanschen angeordneten Federring umfasst, wobei eine erste Gruppe Zuganker direkt oder indirekt mit einem der Anschlussflansche und dem Federring verbunden ist und wobei eine zweite Gruppe Zuganker direkt oder indirekt mit dem anderen Anschlussflansch und dem Federring verbunden ist.

Damit wird - wie noch im Detail zu sehen sein wird - eine gasdichte Verbindung der beiden Kapselungsbausteine möglich, wobei eine einfache und ausreichende Möglichkeit des Ausgleichs von thermischen Bewegungen in Achsrichtung möglich ist.

Die Erfindung sieht also keine Zuganker in dem Sinne vor, wie sie aus den vorbekannten Lösungen bekannt sind, sondern im Wesentlichen einen zwischen den Anschlussflanschen angeordneten Federring, mit dem die Flansche mittels zugkraftübertragender Elemente verbunden sind.

Eine erste Weiterbildung der Erfindung sieht vor, dass das Ausgleichselement mit mindestens einem Befestigungsflansch versehen und mit diesem mit mindestens einem der Anschlussflansche verbunden ist. Dabei kann vorgesehen sein, dass das Ausgleichselement mit zwei Befestigungsflanschen versehen und mit diesen mit den beiden Anschlussflanschen verbunden ist. In diesem Falle sieht eine Fortbildung vor, dass das Ausgleichselement als Faltenbalg ausgebildet ist. Das Ausgleichselement kann dann mehrere im Radialschnitt halbkreisförmige Abschnitte aufweisen.

Möglich ist es auch, dass das Ausgleichselement als Schiebekompensator ausgebildet ist. In diesem Falle ist bevorzugt vorgesehen, dass das Ausgleichselement ein auf einem hülsenförmigen Teil in axiale Richtung gleitend verschiebbares Kontaktelement aufweist.

Der Federring kann ein Ring aus federelastischem Material, insbesondere aus Federstahl, sein. Der Federring kann einen Außendurchmesser aufweisen, der demjenigen der Anschlussflansche entspricht.

Die Zuganker können äquidistant über den Umfang der Anschlussflansche bzw. des Federrings angeordnet sein. Die den einen Anschlussflansch und den Federring verbindenden Zuganker können relativ zueinander zu den den anderen Anschlussflansch und den Federring verbindenden Zugankern in Umfangsrichtung versetzt angeordnet sein. Dabei kann vorgesehen werden, dass die den einen Anschlussflansch und den Federring verbindenden Zuganker in Umfangsrichtung betrachtet jeweils mittig zwischen zwei Zugankern angeordnet sind, die den anderen Anschlussflansch und den Federring verbinden.

Die Zuganker können zumindest teilweise als Gewindestifte ausgebildet sein. Sie können mit Kontermuttern und/oder Schrauben und/oder Abstandshülsen zusammenwirken. Dabei sieht eine Fortbildung vor, dass die Abstandshülsen ein durchgängiges Innengewinde aufweisen.

An den Anschlussflanschen können scheibenförmige Halteringe fixiert sein, die das Ausgleichselement an den Anschlussflanschen festlegen. Die scheibenförmigen Halteringe können dabei mit zumindest einem Teil der Zuganker an den Anschlussflanschen befestigt sein.

Zwischen mindestens einem Zuganker und dem Federring kann gemäß einer Fortbildung mindestens ein in Richtung der Achse wirksames Federelement angeordnet sein. Dieses kann nur in eine Achsrichtung oder in beiden Achsrichtungen wirksam sein.

Zwischen der einen Gruppe Zuganker und dem Federring können Federelemente angeordnet sein, wobei die andere Gruppe Zuganker direkt mit dem Federring verbunden ist.

Bevorzugt wird dabei, dass das Federelement mindestens eine Tellerfeder umfasst. Dabei kann das Federelement auch als Tellerfederpaket ausgebildet sein.

Der Federring kann in Richtung der Achse eine mindestens drei Mal so hohe Federkonstante aufweisen als das Federelement. Der Federring kann hierzu als massives Stahlteil ausgebildet sein.

Zwischen den beiden Anschlussflanschen kann gemäß einer Weiterbildung weiterhin der Befestigungsflansch eines Isolators angeordnet sein. Zwischen dem Ausgleichselement und dem Anschlussflansch bzw. dem Befestigungsflansch des Isolators kann ein Dichtungselement angeordnet sein. Dieses ist bevorzugt ein O-Ring.

Die Kompensationsfähigkeit der Einrichtungen gemäß dem Stand der Technik liegt in einer Größenordnung, die normalerweise nicht benötigt wird. Die Fähigkeit der genannten Vorrichtungen zum Ausgleich axialer, thermisch bedingter Dehnungen liegt also meist weit über den auftretenden Dehnungen infolge der Erwärmung bzw. Abkühlung in der Sammelschiene. Weiterhin ist der bauliche Aufwand, der zur Herstellung der vorbekannten Einrichtungen getrieben werden muss, erheblich, so dass die Anlagen zumeist teuer sind. Die verwirklichte Möglichkeit, thermisch bedingten Ausgleich aufzunehmen, ist indes überdimensioniert. Aufgrund des Aufbaus der vorbekannten Einrichtungen wird auch ein nicht unerheblicher Bauraum benötigt, was nachteilig ist.

Dem gegenüber liefert das erfindungsgemäße Konzept Vorteile:

Die vorgeschlagene Lösung zeichnet sich dadurch aus, dass sie einen recht einfachen Aufbau hat und damit relativ kostengünstig realisiert werden kann. Die Möglichkeit, thermisch bedingte axiale Verschiebungen auszugleichen, ist dennoch absolut ausreichend.

Es ergibt sich damit eine einfache und kostengünstige Lösung.

Weiterhin beansprucht die vorgeschlagene Einrichtung in Form des elastischen Federrings im Vergleich mit vorbekannten Bördel- oder Schiebekompensatoren einen geringeren Einbauraum, was sich ebenfalls positiv bemerkbar macht.

Die Montage der dargestellten Vorrichtung ist auch sehr einfach möglich, so dass die diesbezüglichen Kosten gering bleiben.

Der Federring, der Bestandteil der zugkraftübertragenden Anordnung ist, ist im Vergleich mit den vorbekannten Lösungen auch insofern vorteilhaft, weil die Kraftübertragung gleichmäßig an den Anschlussflanschen verteilt eingeleitet werden kann. In vorteilhafter Weise können damit hochfeste und damit teure Werkstoffe und materialintensive Konstruktionen zur Befestigung der Zuganker vermieden werden. Die von dem Gas ausgeübten Axialkräfte werden durch den Federring gehalten.

Das vorgeschlagene Konzept ist - wie sich aus den obigen Ausführungen ergibt - sowohl bei Bördelkompensatoren als auch bei Schiebekompensatoren einsetzbar. Bei beiden Lösungen ist eine längen- und kraftgestaffelte Ausführung möglich. Das bedeutet, dass das vorgeschlagene Konzept baukastenartig genutzt werden kann.

In der Zeichnung sind Ausführungsbeispiele der Erfindung dargestellt. Es zeigen:
Fig. 1 in perspektivischer Ansicht schematisch zwei miteinander verbundene Kapselungsbausteine mit einem Kapselungsabschnitt, wobei hier als Einbaubeispiel eine Sammelschiene einer Hochspannungsanlage gezeigt ist,
Fig. 2 schematisch den Radialschnitt durch einen Teil des Kapselungsabschnitts zwischen den beiden Kapselungsbausteinen,
Fig. 3 eine schematische perspektivische Darstellung des Kapselungsabschnitts gemäß Fig. 2,
Fig. 4 die zwischen den beiden Kapselungsbausteinen angeordnete und die Zugkraft übertragende Einheit gemäß einer zu Fig. 2 bzw. 3 alternativen Ausführungsform in schematischer perspektivischer Darstellung,
Fig. 5 eine vergrößerte Darstellung von Fig. 4, wobei hier nur ein Teil der Einheit und diese im Schnitt dargestellt ist,
Fig. 6 den Radialschnitt der in Fig. 5 dargestellten Einheit,
Fig. 7 eine alternative Ausgestaltung der Erfindung in der Fig. 6 entsprechenden schematischen Darstellung,
Fig. 8 eine alternative Ausgestaltung der Erfindung in der Fig. 2 entsprechenden schematischen Darstellung,
Fig. 9 eine schematische perspektivische Darstellung des Kapselungsabschnitts gemäß Fig. 8,
Fig. 10 in perspektivischer Ansicht schematisch zwei miteinander verbundene Kapselungsbausteine in einer weiteren alternativen Ausführungsform der Erfindung,
Fig. 11 eine schematische perspektivische Darstellung des Kapselungsabschnitts gemäß Fig. 10 in vergrößerter Ansicht, wobei ein Radialschnitt durch einen Zuganker einer ersten Gruppe dargestellt ist,
Fig. 12 eine schematische perspektivische Darstellung des Kapselungsabschnitts gemäß Fig. 10 in vergrößerter Ansicht, wobei ein Radialschnitt durch einen Zuganker einer zweiten Gruppe dargestellt ist,
Fig. 13 eine weitere alternative Ausgestaltung der Erfindung in der Fig. 2 entsprechenden schematischen Darstellung und
Fig. 14 eine schematische perspektivische Darstellung des Kapselungsabschnitts gemäß Fig. 13.

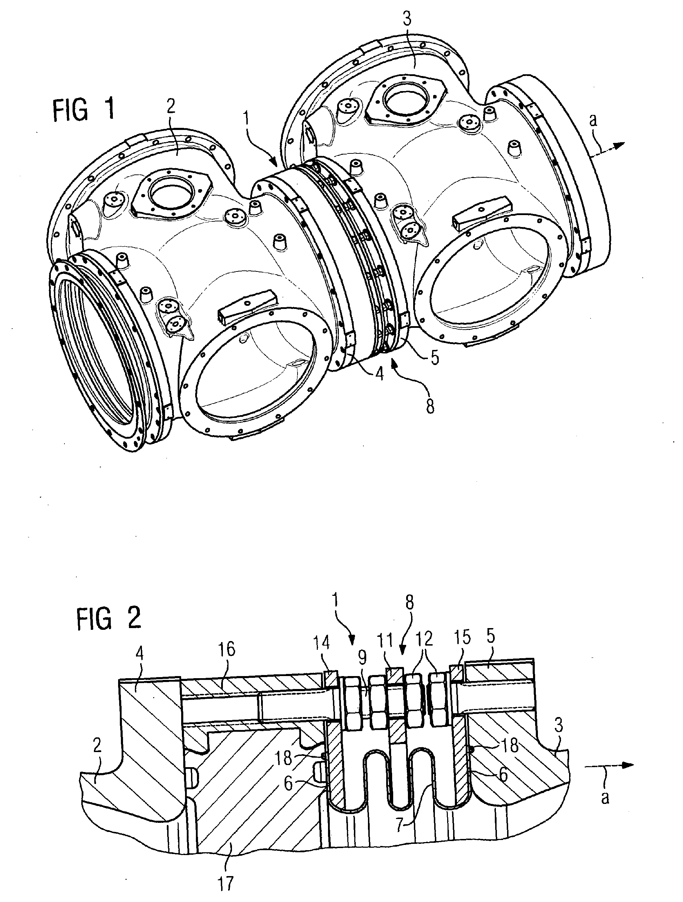

In Fig. 1 ist ein Teil einer Hochspannungsanlage dargestellt, nämlich einer Sammelschiene. Zu sehen sind zwei Kapselungsbausteine 2 und 3, die gasisoliert sind und die über einen Kapselungsabschnitt 1 miteinander gasdicht verbunden sind. Der Kapselungsabschnitt 1 stellt nicht nur eine gasdichte Verbindung zwischen den Kapselungsbausteinen 2, 3 sicher, mit ihm ist es auch möglich, thermische Verschiebungen zwischen den Teilen 2, 3 in Richtung der Achse a auszugleichen.

Der Kapselungsabschnitt 1 ist dabei zwischen zwei Anschlussflanschen 4 und 5 angeordnet, wobei je ein Anschlussflansch 4 bzw. 5 am Kapselungsbaustein 2 bzw. 3 an der Seite des Kapselungsbausteins 2, 3 angeordnet ist, an den der dargestellte Kapselungsabschnitt 1 angrenzt.

Details zum Aufbau des Kapselungsabschnitts 1 gehen aus Fig. 2. hervor.

Grundsätzlich ist - wie bereits erläutert - der Kapselungsabschnitt 1 zwischen den beiden Anschlussflanschen 4 und 5 der Kapselungsbausteine 2, 3 montiert. Wesentlicher Teil des Kapselungsabschnitts 1 ist hier ein Ausgleichselement 7 in Form eines Faltenbalges, der im axialen Endbereich je einen Befestigungsflansch 6 aufweist. Der Faltenbalg 7 ist mit seinen Befestigungsflanschen 6 gasdicht an den Anschlussflanschen 4 und 5 festgelegt. Die Befestigung der Befestigungsflansche 6 an den angrenzenden Bauteilen erfolgt vorliegend mit scheibenförmigen Halteringen 14 und 15, die an die angrenzenden Bauteile angeschraubt sind und die Befestigungsflansche 6 zwischen sich und dem angrenzenden Bauteil einklemmen und damit fixieren. Nur sehr schematisch ist in Fig. 2 angedeutet, dass zwischen dem Befestigungsflansch 6 und dem angrenzenden Bauteil ein Dichtungselement 18 vorgesehen werden kann, um Gasdichtigkeit sicherzustellen.

Im vorliegenden Falle ist der in Fig. 2 linke Befestigungsflansch 6 nicht direkt am Anschlussflansch 4 befestigt, sondern mittelbar über einen Befestigungsflansch 16 bzw. einen Isolator 17, die am Anschlussflansch 4 festgelegt sind. Indes ist der in Fig. 2 rechte Befestigungsflansch 6 des Faltenbalgs 7 direkt am Anschlussflansch 5 festgelegt. Insoweit entspricht die Lösung noch dem Stand der Technik.

Das zugkraftübertragende Element 8, das für die Übertragung von Zugkräften zwischen den beiden Kapselungsbausteinen 2, 3 benötigt wird, ist jedoch in neuartiger Weise gestaltet:

Es weist als wesentlichen Bestandteil einen Federring 11 auf, der zwischen den beiden Anschlussflanschen 4 und 5 angeordnet ist. Der Federring 11 ist dabei etwa mittig zwischen dem Ende des Befestigungsflansches 16 für den Isolator 17 und dem Anschlussflansch 5 angeordnet. Der Federring 11 ist mit Zugankern 9 und 10 mit dem Befestigungsflansch 16 (und damit mit dem Anschlussflansch 4) und dem Anschlussflansch 5 verbunden. Die hier als Zuganker angesprochenen Elemente sind im Ausführungsbeispiel Gewindestifte, die so eingebaut sind, dass sie axiale Kräfte zwischen dem Befestigungsflansch 16 (und damit dem Anschlussflansch 4) und dem Federring 11 bzw. zwischen dem Federring 11 und dem Anschlussflansch 5 übertragen können.

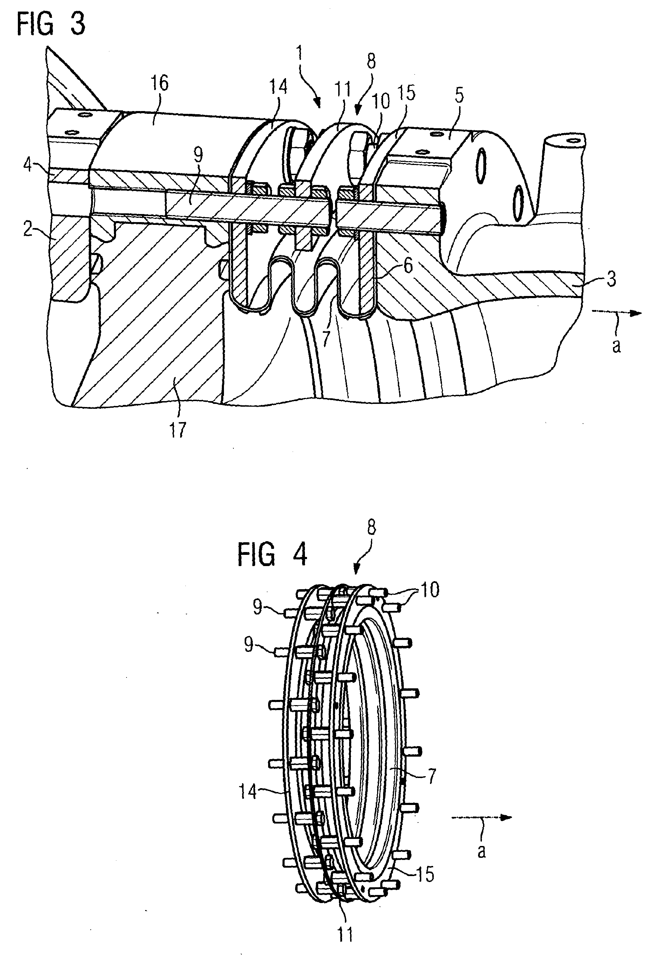

Die genaue Anordnung der Zuganker 9, 10 geht besonders gut aus den Figuren 4, 5 und 6 hervor.

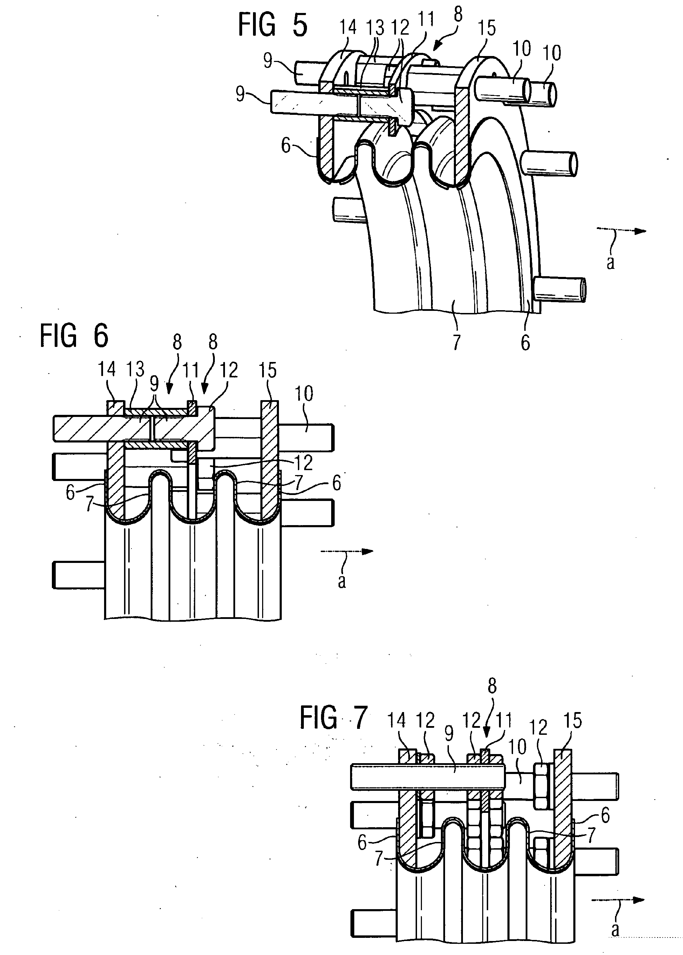

Eine erste Gruppe Zuganker 9 in Form der genannten Gewindestifte verbindet den Befestigungsflansch 16 mit dem Federring 11. Die Zuganker 9 sind dabei äquidistant über den Umfang des Befestigungsflansches 16 bzw. des Federrings 11 verteilt angeordnet. Wie in den Figuren 5 und 6 gesehen werden kann, ist dabei vorgesehen, dass die Gewindestifte 9 den scheibenförmigen Haltering 14 durchsetzen und ansonsten im Befestigungsflansch 16 in entsprechenden, nicht dargestellten Gewindebohrungen verankert sind. Das axial vom Befestigungsflansch 16 in Richtung Federring 11 herausragende Ende des Zugankers 9, also des Gewindestifts, ist in eine Abstandshülse 13 mit Innengewinde eingeschraubt. Die Abstandshülse 13 definiert zwischen dem scheibenförmigen Haltering 14 und dem Federring 11 einen Abstand. Die Fixierung des Zugankers 9 am Federring 11 erfolgt mit einer Schraube 12, die ebenfalls in das Innengewinde der Abstandshülse 13 eingeschraubt ist und insoweit als Bestandteil des Zugankers 9 anzusprechen ist. Damit ist der Federring 11 relativ zum Befestigungsflansch 16 axial festgelegt.

Entsprechendes gilt für die Anbindung des Anschlussflansches 5 am Federring 11:

Die Zuganker 10 in Form von Gewindestiften sind in den Anschlussflansch 5 eingeschraubt und ragen mit ihrem freien Ende axial in Richtung Federring 11. Diese freien Enden sind auch wieder in das Innengewinde in einer Abstandshülse 13 eingeschraubt. Entsprechend zur Fixierung der Zuganker 9 sind auch die Zuganker 10 dann mit Schrauben 12 am Federring 11 fixiert, die in das Innengewinde der Abstandshülse eingeschraubt sind und die damit Bestandteil der Zuganker 10 sind.

Wie in Fig. 4 zu sehen ist, wechseln sich über den Umfang herum betrachtet die Zuganker 9 und 10 mit ihrer Anbindung am Federring 11 ab, d. h. was ihre Festlegung am Federring 11 anbelangt. Der Federring 11 wird dadurch bei Auftreten einer Axialkraft zwischen den beiden Anschlussflanschen 4 und 5 wellig gebogen, wodurch er eine entsprechende Federkonstante in axiale Richtung entwickelt.

Damit erreicht die Anordnung des zugkraftübertragenden Elements 8 bestehend aus dem zentrischen Federring 11 und den Zugankern 9 und 10 einen sehr kompakten Aufbau, der es jedoch ermöglicht, eine hinreichende Ausgleichsmöglichkeit beim Auftreten von Thermospannungen zuzulassen.

Bei der Lösung gemäß Fig. 7 ist eine zu Fig. 6 insofern alternative Ausgestaltung vorgeschlagen, als dass hier keine Abstandshülsen 13 vorgesehen sind (wie auch bei den Lösungen gemäß Fig. 2 und Fig. 3), die die Distanz zwischen den scheibenförmigen Halteringen 14 und 15 und dem Federring 11 definieren. Vielmehr sind hier die Zuganker 9, 10 in Form der Gewindestifte im Befestigungsflansch 16 bzw, im Anschlussflansch 5 verankert und durchsetzen Bohrungen in den scheibenförmigen Halteringen 14, 15 und im Federring 11. Die Festlegung des Federrings 11 an den Gewindestiften 9, 10 und auch die Festlegung der scheibenförmigen Halteringe 14 und 15 am Befestigungsflansch 16 und am Anschlussflansch 5 erfolgt hier durch Kontermuttern 12, die deshalb dieselbe Bezugsziffer wie die Schrauben 12 in den Figuren 5 und 6 tragen, weil sie dieselbe Funktion erfüllen. Sie legen nämlich die Gewindestifte 9, 10 axial am Federring 11 fest.

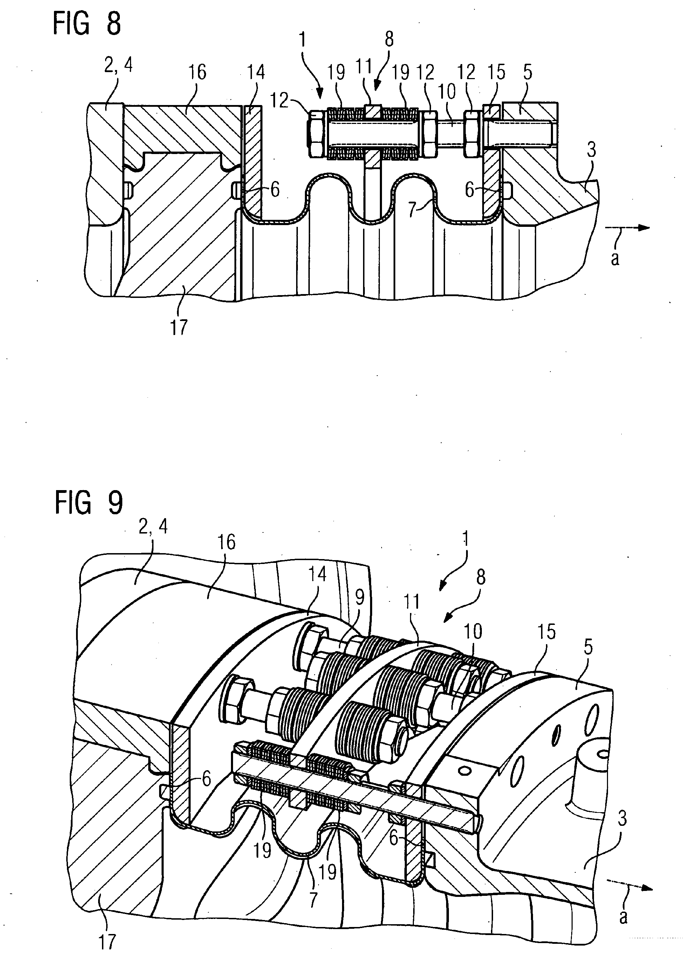

In den Figuren 8 und 9 ist eine weitere alternative Ausgestaltung der Erfindung dargestellt. Der Unterschied insbesondere zu der in Fig. 2 dargestellten und erläuterten Konstruktion besteht darin, dass die Zuganker 9, 10 hier nicht fest am Federring 11 festgelegt sind, sondern dass die Zuganker 9, 10 über Federelemente 19 in Form von Tellerfederpaketen so mit dem Federring 11 verbunden sind, dass eine Bewegung in Richtung der Achse a zwischen Federring 11 und Zugankern 9, 10 möglich ist, und zwar in beiden Achsrichtungen.

Der Federring 11 kann bei der Lösung gemäß der Figuren 8 und 9 auch stabiler ausgeführt werden, namentlich als massives Stahlteil, da die Elastizität in Achsrichtung durch die Teillerfederpakete 19 hergestellt wird.

Die Anordnung ist im Wesentlichen symmetrisch ausgebildet, d. h. dass der Federring 11 weitgehend zentrisch zwischen den beiden scheibenförmigen Halteringen 14, 15 positioniert ist.

Vorgesehen ist nach dieser Lösung also die Verwendung eines federnd gelagerten relativ steifen Rings 11 zur Kraftübertragung der Gaskräfte am Kompensator bei gleichzeitiger Dehnungskompensation. Der fliegend gelagerte Stahlring 11 übernimmt also die Aufgabe der Zuganker. Die Tellerfedern 19 übernehmen die Kompensation der Wärmedehnung. Der relativ steife Ring wird wechselseitig an den benachbarten Flanschen befestigt.

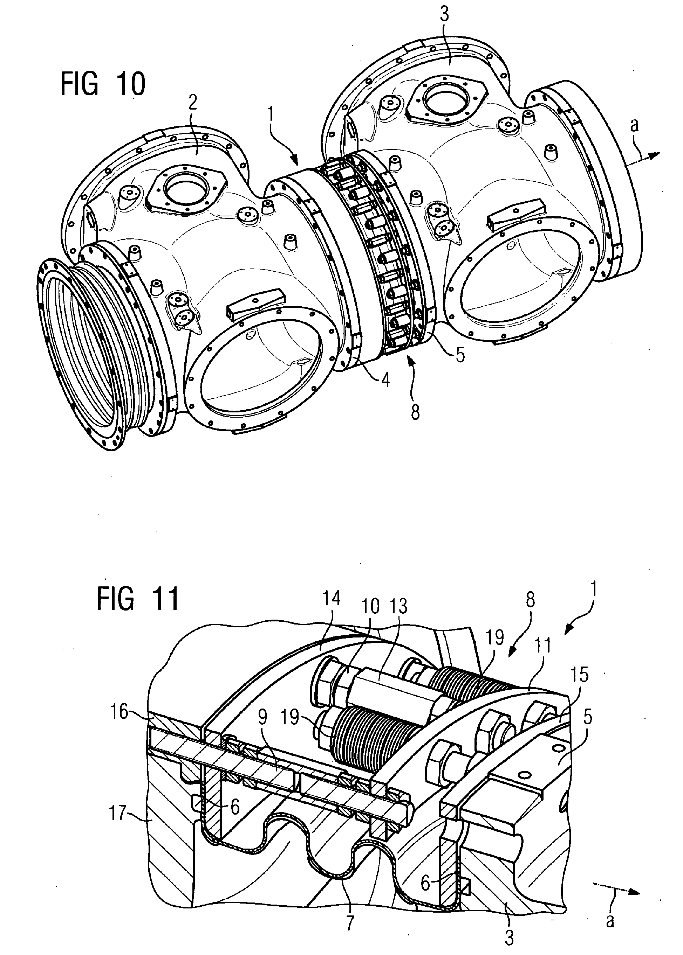

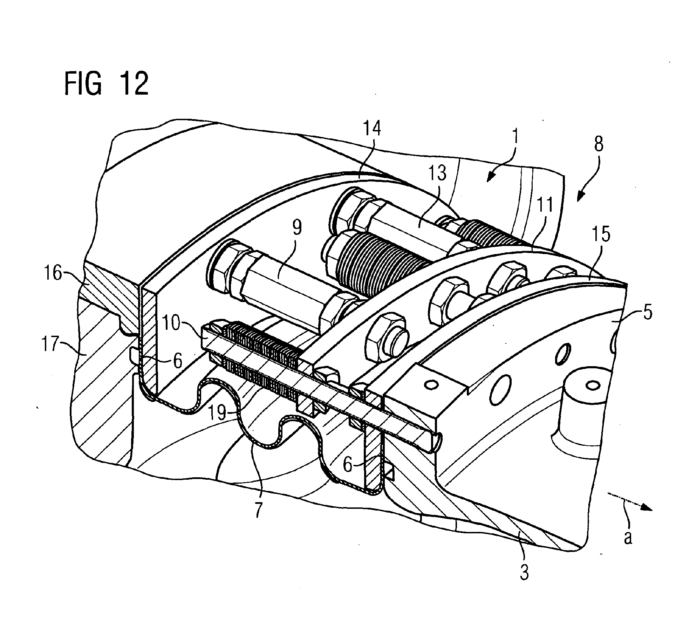

Eine zu Fig. 8 und 9 ähnliche alternative Lösung ist in den Figuren 10, 11 und 12 dargestellt. Fig. 11 zeigt eine Schnittdarstellung durch den Kapselungsabschnitt, wobei gerade ein Zuganker der ersten Gruppe 9 geschnitten ist. Demgegenüber zeigt Fig. 12 einen solchen Schnitt, der in Umfangsrichtung um einen gewissen Winkelbereich so gedreht ist, dass ein Zuganker 10 der zweiten Gruppe geschnitten ist.

Der Unterschied zu der Lösung gemäß Fig. 8 und 9 besteht darin, dass hier nur eine Gruppe Zuganker 10 über Federelemente 19 mit dem Federring 11 verbunden sind. Die andere Gruppe Zuganker 9 ist - wie in den Ausführungsbeispielen gemäß Fig. 1 bis Fig. 7 - direkt mit dem Federring 11 verbunden, also ohne Federelemente 19. Demgemäß kann hier der Federring 11 auch außerhalb der axialen Mitte zwischen den beiden scheibenförmigen Halteringen 14, 15 angeordnet werden.

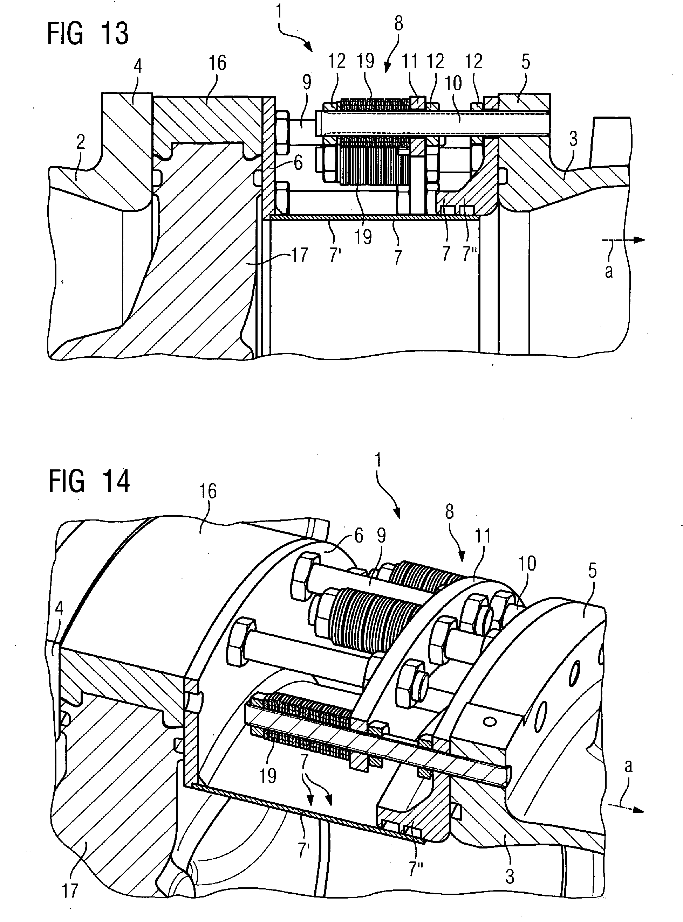

In den Figuren 13 und 14 ist gemäß einer alternativen Ausgestaltung der Erfindung zu sehen, dass das Erfindungskonzept nicht nur - wie in den Figuren 1 bis 12 - bei Bördelkompensatoren (unter Nutzung eines Ausgleichselements in Form eines Faltenbalgs) sondern auch bei Schiebekompensatoren zum Einsatz kommen kann.

Demgemäß ist das Ausgleichselement 7 hier als Bauteil eines Schiebekompensators ausgebildet, indem ein hülsenförmiges Teil 7' vorgesehen ist, das einseitig über einen Befestigungsflansch 6 und über den Befestigungsflansch 16 am Anschlussflansch 4 festgelegt ist. Auf dem hülsenförmigen Teil 7" kann in axiale Richtung a ein Kontaktelement 7" dichtend gleiten, und so den Ausgleich axialer Wärmespannungen ausgleichen.

Ansonsten ist die Lösung gemäß der Figuren 13 und 14 analog der vorbeschriebenen Ausführungsbeispiele ausgeführt, insbesondere was die Ausgestaltung des zugkraftübertragenden Elements 8 anbelangt.

Die Federelemente 19 können dabei nur in eine Achsrichtung (s. z. B. Fig. 12) oder auch in beiden Achsrichtungen wirksam sein (s. z. B. Fig. 8).

Der elastisch gelagerte Kompensatorring ist im Vergleich mit den vorbekannten Zugankern vorteilhaft, da die Kraftübertragung gleichmäßig am Flanschumfang verteilt wird.

Generell gilt, dass die Zuganker 9, 10 fluchtend oder - in Umfangsrichtung - versetzt zueinander angeordnet sein können. Es ergibt sich demgemäß entweder eine gleichgerichtete Anordnung (s. Fig. 3) oder eine versetzte Anordnung (s. Figuren 4 bis 7).

Die vorgeschlagene Vorrichtung schafft eine Zugankerlösung für gattungsgemäße Kapselungsabschnitte zwischen zwei Kapselungsbausteinen, die sehr einfach und preiswert aufgebaut ist und die nur einen geringen Bauraum benötigt. Der fliegend gelagerte Federring aus Federstahl übernimmt also die Aufgabe der vorbekannten Zuganker sowie die Kompensation der Wärmedehnungen. Er ist bevorzugt wechselseitig an den benachbarten Flanschen befestigt.

### Bezugszeichenliste

- 1: Kapselungsabschnitt
- 2: Kapselungsbaustein
- 3: Kapselungsbaustein
- 4: Anschlussflansch
- 5: Anschlussflansch
- 6: Befestigungsflansch
- 7: Ausgleichselement
- 7': hülsenförmiges Teil
- 7": Kontaktelement
- 8: zugkraftübertragendes Element
- 9: Zuganker (Gewindestift)
- 10: Zuganker (Gewindestift)
- 11: Federring
- 12: Schraube / Kontermutter
- 13: Abstandshülse
- 14: scheibenförmiger Haltering
- 15: scheibenförmiger Haltering
- 16: Befestigungsflansch
- 17: Isolator
- 18: Dichtungselement
- 19: Federelement

- a: Achse

## Patentansprüche

1. Kapselungsabschnitt (1) einer gasisolierten Hochspannungsanlage, die mindestens zwei entlang einer Achse (a) nebeneinander angeordnete Kapselungsbausteine (2, 3) aufweist, wobei jeder Kapselungsbaustein (2, 3) mit je mindestens einem Anschlussflansch (4, 5) versehen ist, wobei zwischen zwei einander zugewandten Anschlussflanschen (4, 5) ein Ausgleichselement (7) angeordnet ist und wobei zwischen den Anschlussflanschen (4, 5) ein axialkraftübertragendes Element (8) angeordnet ist,
**dadurch gekennzeichnet, dass**
das axialkraftübertragende Element (8) eine Anzahl Zuganker (9, 10) und einen axial zwischen den Anschlussflanschen (4, 5) angeordneten Federring (11) umfasst, wobei eine erste Gruppe Zuganker (9) direkt oder indirekt mit einem der Anschlussflansche (4, 5) und dem Federring (11) verbunden ist und wobei eine zweite Gruppe Zuganker (9) direkt oder indirekt mit dem anderen Anschlussflansch (4, 5) und dem Federring (11) verbunden ist.

2. Kapselungsabschnitt nach Anspruch 1,
**dadurch gekennzeichnet, dass**
das Ausgleichselement (7) mit mindestens einem Befestigungsflansch (6) versehen und mit diesem mit mindestens einem der Anschlussflansche (4, 5) verbunden ist.

3. Kapselungsabschnitt nach Anspruch 2,
**dadurch gekennzeichnet, dass**
das Ausgleichselement (7) mit zwei Befestigungsflanschen (6) versehen und mit diesen mit den beiden Anschlussflanschen (4, 5) verbunden ist.

4. Kapselungsabschnitt nach Anspruch 3,
**dadurch gekennzeichnet, dass**
das Ausgleichselement (7) als Faltenbalg ausgebildet ist.

5. Kapselungsabschnitt nach Anspruch 4,
**dadurch gekennzeichnet, dass**
das Ausgleichselement (7) mehrere im Radialschnitt halbkreisförmige Abschnitte aufweist.

6. Kapselungsabschnitt nach Anspruch 1 oder 2,
**dadurch gekennzeichnet, dass**
das Ausgleichselement (7) als Schiebekompensator ausgebildet ist.

7. Kapselungsabschnitt nach Anspruch 6,
**dadurch gekennzeichnet, dass**
das Ausgleichselement (7) ein auf einem hülsenförmigen Teil (7') in axiale Richtung gleitend verschiebbares Kontaktelement (7") aufweist.

8. Kapselungsabschnitt nach einem der Ansprüche 1 bis 7,
**dadurch gekennzeichnet, dass**
der Federring (11) ein Ring aus federelastischem Material, insbesondere aus Federstahl, ist.

9. Kapselungsabschnitt nach einem der Ansprüche 1 bis 8,
**dadurch gekennzeichnet, dass**
der Federring (11) einen Außendurchmesser aufweist, der demjenigen der Anschlussflansche (4, 5) entspricht.

10. Kapselungsabschnitt nach einem der Ansprüche 1 bis 9,
**dadurch gekennzeichnet, dass**
die Zuganker (9, 10) äquidistant über den Umfang der Anschlüssflansche (4, 5) bzw. des Federrings (11) angeordnet sind.

11. Kapselungsabschnitt nach einem der Ansprüche 1 bis 10,
**dadurch gekennzeichnet, dass**
die den einen Anschlussflansch (4) und den Federring (11) verbindenden Zuganker (9) relativ zueinander zu den den anderen Anschlussflansch (5) und den Federring (11) verbindenden Zugankern (10) in Umfangsrichtung versetzt angeordnet sind.

12. Kapselungsabschnitt nach Anspruch 11,
**dadurch gekennzeichnet, dass**
die den einen Anschlussflansch (4) und den Federring (11) verbindenden Zuganker (9) in Umfangsrichtung betrachtet jeweils mittig zwischen zwei Zugankern (10) angeordnet sind, die den anderen Anschlussflansch (5) und den Federring (11) verbinden.

13. Kapselungsabschnitt nach einem der Ansprüche 1 bis 12,
**dadurch gekennzeichnet, dass**
die Zuganker (9, 10) zumindest teilweise als Gewindestifte ausgebildet sind.

14. Kapselungsabschnitt nach Anspruch 13,
**dadurch gekennzeichnet, dass**
die Zuganker (9, 10) mit Kontermuttern und/oder Schrauben (12) und/oder Abstandshülsen (13) zusammenwirken.

15. Kapselungsabschnitt nach Anspruch 14,
**dadurch gekennzeichnet, dass**
die Abstandshülsen (13) ein durchgängiges Innengewinde aufweisen.

16. Kapselungsabschnitt nach einem der Ansprüche 1 bis 15,
**dadurch gekennzeichnet, dass**
an den Anschlussflanschen (4, 5) scheibenförmige Halteringe (14, 15) fixiert sind, die das Ausgleichselement (7) an den Anschlussflanschen (4, 5) festlegen.

17. Kapselungsabschnitt nach Anspruch 16,
**dadurch gekennzeichnet, dass**
die scheibenförmigen Halteringe (14, 15) mit zumindest einem Teil der Zuganker (9, 10) an den Anschlussflanschen (4, 5) befestigt sind.

18. Kapselungsabschnitt nach einem der Ansprüche 1 bis 17,
**dadurch gekennzeichnet, dass**
zwischen mindestens einem Zuganker (9, 10) und dem Federring (11) mindestens ein in Richtung der Achse (a) wirksames Federelement (19) angeordnet ist.

19. Kapselungsabschnitt nach Anspruch 18,
**dadurch gekennzeichnet, dass**
zwischen der einen Gruppe Zuganker (10) und dem Federring (11) Federelemente (19) angeordnet sind, wobei die andere Gruppe Zuganker (9) direkt mit dem Federring (11) verbunden ist.

20. Kapselungsabschnitt nach Anspruch 18 oder 19,
**dadurch gekennzeichnet, dass**
das Federelement (19) mindestens eine Tellerfeder umfasst.

21. Kapselungsabschnitt nach Anspruch 20,
**dadurch gekennzeichnet, dass**
das Federelement (19) als Tellerfederpaket ausgebildet ist.

22. Kapselungsabschnitt nach einem der Ansprüche 18 bis 21,
**dadurch gekennzeichnet, dass**
der Federring (11) in Richtung der Achse (a) eine mindestens drei Mal so hohe Federkonstante aufweist als das Federelement (19).

23. Kapselungsabschnitt nach Anspruch 22,
**dadurch gekennzeichnet, dass**
der Federring (11) als massives Stahlteil ausgebildet ist.

24. Kapselungsabschnitt nach einem der Ansprüche 1 bis 23,
**dadurch gekennzeichnet, dass**
zwischen den beiden Anschlussflanschen (4, 5) weiterhin der Befestigungsflansch (16) eines Isolators (17) angeordnet ist.

25. Kapselungsabschnitt nach einem der Ansprüche 1 bis 24,
**dadurch gekennzeichnet, dass**
zwischen dem Ausgleichselement (7) und dem Anschlussflansch (4, 5) bzw. dem Befestigungsflansch (16) des Isolators (17) ein Dichtungselement (18) angeordnet ist.

26. Kapselungsabschnitt nach Anspruch 25,
**dadurch gekennzeichnet, dass**
das Dichtungselement (18) ein O-Ring ist.

## Claims

1. Encapsulation section (1) of a gas-insulated high-voltage installation, which has at least two encapsulation modules (2, 3) which are arranged alongside one another along an axis (a) with each encapsulation module (2, 3) being provided with in each case at least one connecting flange (4, 5), with a compensation element (7) being arranged between two mutually facing connecting flanges (4, 5), and with an element (8) which transmits axial force being arranged between the connecting flanges (4, 5),
**characterized in that**
the element (8) which transmits axial force comprises a number of tie rods (9, 10) and a spring washer (11) which is arranged axially between the connecting flanges (4, 5), with a first group of tie rods (9) being connected directly or indirectly to one of the connecting flanges (4, 5) and to the spring washer (11), and with a second group of tie rods (9) being connected directly or indirectly to the other connecting flange (4, 5) and to the spring washer (11).

2. Encapsulation section according to Claim 1,
**characterized in that**
the compensation element (7) is provided with at least one attachment flange (6) and is connected thereto by at least one of the connecting flanges (4, 5).

3. Encapsulation section according to Claim 2,
**characterized in that**
the compensation element (7) is provided with two attachment flanges (6) and is connected to the two connecting flanges (4, 5) by means of these attachment flanges (6).

4. Encapsulation section according to Claim 3,
**characterized in that**
the compensation element (7) is in the form of a bellows.

5. Encapsulation section according to Claim 4,
**characterized in that**
the compensation element (7) has a plurality of sections with a semicircular radial section.

6. Encapsulation section according to Claim 1 or 2,
**characterized in that**
the compensation element (7) is in the form of a shift compensator.

7. Encapsulation section according to Claim 6,
**characterized in that**
the compensation element (7) has a contact element (7'') which can be moved, sliding, in the axial direction on a part (7') which is in the form of a sleeve.

8. Encapsulation section according to one of Claims 1 to 7,
**characterized in that**
the spring washer (11) is a ring composed of resilient material, in particular spring steel.

9. Encapsulation section according to one of Claims 1 to 8,
**characterized in that**
the spring washer (11) has an external diameter which corresponds to that of the connecting flanges (4, 5).

10. Encapsulation section according to one of Claims 1 to 9,
**characterized in that**
the tie rods (9, 10) are arranged at equal intervals over the circumference of the connecting flanges (4, 5) and of the spring washer (11).

11. Encapsulation section according to one of Claims 1 to 10,
**characterized in that**
the tie rods (9) which connect one connecting flange (4) and the spring washer (11) are arranged relative to one another offset in the circumferential direction with respect to the tie rods (10) which connect the other connecting flange (5) and the spring washer (11).

12. Encapsulation section according to Claim 11,
**characterized in that**
the tie rods (9) which connect one connecting flange (4) and the spring washer (11) are each arranged centrally between two tie rods (10) when considered in the circumferential direction, which tie rods (10) connect the other connecting flange (5) and the spring washer (11).

13. Encapsulation section according to one of Claims 1 to 12,
**characterized in that**
the tie rods (9, 10) are at least partially in the form of threaded pins.

14. Encapsulation section according to Claim 13,
**characterized in that**
the tie rods (9, 10) interact with lock nuts, and/or screws (12) and/or spacing sleeves (13).

15. Encapsulation section according to Claim 14,
**characterized in that**
the spacing sleeves (13) have a continuous internal thread.

16. Encapsulation section according to one of Claims 1 to 15,
**characterized in that**
holding rings (14, 15) which are in the form of disks and fix the compensation element (7) on the connecting flanges (4, 5) are fixed on the connecting flanges (4, 5).

17. Encapsulation section according to Claim 16,
**characterized in that**
the holding rings (14, 15) which are in the form of disks are attached to the connecting flanges (4, 5) by means of at least one part of the tie rods (9, 10).

18. Encapsulation section according to one of Claims 1 to 17,
**characterized in that**
at least one spring element (19) which acts in the direction of the axis (a) is arranged between at least one tie rod (9, 10) and the spring washer (11).

19. Encapsulation section according to Claim 18,
**characterized in that**
spring elements (19) are arranged between one group of tie rods (10) and the spring washer (11), with the other group of tie rods (9) being connected directly to the spring washer (11).

20. Encapsulation section according to Claim 18 or 19,
**characterized in that**
the spring element (19) comprises at least one cup spring.

21. Encapsulation section according to Claim 20,
**characterized in that**
the spring element (19) is in the form of a cup spring pack.

22. Encapsulation section according to one of Claims 18 to 21,
**characterized in that**
the spring washer (11) has a spring constant in the direction of the axis (a) which is at least three times as great as that of the spring element (19).

23. Encapsulation section according to Claim 22,
**characterized in that**
the spring washer (11) is in the form of a solid steel part.

24. Encapsulation section according to one of Claims 1 to 23,
**characterized in that**
the attachment flange (16) of an insulator (17) is also arranged between the two connecting flanges (4, 5).

25. Encapsulation section according to one of Claims 1 to 24,
**characterized in that**
a sealing element (18) is arranged between the compensation element (7) and the connecting flange (4, 5) or the attachment flange (16) of the insulator (17).

26. Encapsulation section according to Claim 25,
**characterized in that**
the sealing element (18) is an O-ring.

## Revendications

1. Section ( 1 ) de blindage d'une installation de haute tension isolée par du gaz, qui a au moins deux modules ( 2, 3 ) de blindage disposés les uns à côté des autres le long d'un axe ( a ), chaque module ( 2, 3 ) de blindage étant pourvu respectivement d'au moins une bride ( 4, 5 ) de raccordement, dans lequel un élément ( 7 ) de compensation est disposé entre deux brides ( 4, 5 ) de raccordement tournées l'une vers l'autre et dans lequel un élément ( 8 ) de transmission d'une force axiale est disposé entre les deux brides ( 4, 5 ) de raccordement,
**caractérisée en ce que**
l'élément ( 8 ) de transmission d'une force axiale comprend un certain nombre de tirants ( 9, 10 ) et un jonc ( 11 ) élastique disposé axialement entre les brides ( 4, 5 ) de raccordement, un premier groupe de tirants ( 9 ) étant reliés directement ou indirectement à l'une des brides ( 4, 5 ) de raccordement et au jonc ( 11 ) élastique, tandis qu'un deuxième groupe de tirants ( 9 ) est relié directement ou indirectement à l'autre bride ( 4, 5 ) de raccordement et au jonc ( 11 ) élastique.

2. Section de blindage suivant la revendication 1,
**caractérisée en ce que**
l'élément ( 7 ) de compensation est pourvu d'au moins une bride ( 6 ) de fixation et est relié par celle-ci à au moins l'une des brides ( 4, 5 ) de raccordement.

3. Section de blindage suivant la revendication 2,
**caractérisée en ce que**
l'élément ( 7 ) de compensation est pourvu de deux brides ( 6 ) de fixation et est relié par celles-ci aux deux brides ( 4, 5 ) de raccordement.

4. Section de blindage suivant la revendication 3,
**caractérisée en ce que**
l'élément ( 7 ) de compensation est constitué sous la forme d'un soufflet.

5. Section de blindage suivant la revendication 4,
**caractérisée en ce que**
l'élément ( 7 ) de compensation a plusieurs sections hémicirculaires en coupe radiale.

6. Section de blindage suivant la revendication 1 ou 2,
**caractérisée en ce que**
l'élément ( 7 ) de compensation est constitué en compensateur de coulissement.

7. Section de blindage suivant la revendication 6,
**caractérisée en ce que**
l'élément ( 7 ) de compensation a un élément ( 7' ) de contact pouvant glisser en direction axiale sur une partie ( 7" ) en forme de manchon.

8. suivant l'une des revendications 1 à 7,
**caractérisée en ce que**
le jonc ( 11 ) élastique est un jonc en matériau ayant l'élasticité d'un ressort, notamment en acier pour ressort.

9. Section de blindage suivant l'une des revendications 1 à 8,
**caractérisée en ce que**
le jonc ( 11 ) élastique a un diamètre extérieur qui correspond à celui des brides ( 4, 5 ) de raccordement.

10. section de blindage suivant l'une des revendications 1 à 9,
**caractérisée en ce que**
les tirants ( 9, 10 ) sont équidistants sur le pourtour des brides ( 4, 5 ) de raccordement ou du jonc ( 11 ) élastique.

11. Section de blindage suivant l'une des revendications 1 à 10,
**caractérisée en ce que**
les tirants ( 9 ) reliant une bride ( 4 ) de raccordement et le jonc ( 11 ) élastique sont décalés dans la direction périphérique, relativement aux tirants ( 10 ) reliant l'autre bride ( 5 ) de raccordement et le jonc ( 11 ) élastique.

12. section de blindage suivant la revendication 11,
**caractérisée en ce que**
les tirants ( 9 ) reliant une bride ( 4 ) de raccordement et le jonc ( 11 ) élastique sont, considérés dans la direction périphérique, respectivement au milieu entre deux tirants ( 10 ), qui relient l'autre bride ( 5 ) de raccordement et le jonc ( 11 ) élastique.

13. section de blindage suivant l'une des revendications 1 à 12,
**caractérisée en ce que**
les tirants ( 9, 10 ) sont constitués, au moins en partie, sous la forme chevilles filetées.

14. Section de blindage suivant la revendication 13,
**caractérisée en ce que**
les tirants ( 9, 10 ) coopèrent avec des contre-écrous et/ou avec des vis ( 12 ) et/ou avec des douilles ( 13 ) d'entretoisement.

15. Section de blindage suivant la revendication 14,
**caractérisée en ce que**
les douilles ( 13 ) d'entretoisement ont un taraudage intérieur continu.

16. Section de blindage suivant l'une des revendications 1 à 15,
**caractérisée en ce que**
aux brides ( 4, 5 ) de raccordement sont fixés des anneaux ( 14, 15 ) de maintien en forme de disque, qui fixent l'élément ( 7 ) de compensation sur les brides ( 4, 5 ) de raccordement.

17. Section de blindage suivant la revendication 16,
**caractérisée en ce que**
les anneaux ( 14, 15 ) de maintien en forme de disque sont fixés aux brides ( 4, 5 ) de raccordement par au moins une partie des tirants ( 9, 10 ).

18. Section de blindage suivant l'une des revendications 1 à 17,
**caractérisée en ce que**
au moins un élément ( 19 ) à ressort efficace dans la direction de l'axe ( a ) est disposé entre au moins un tirant ( 9, 10 ) et le jonc ( 11 ) élastique.

19. Section de blindage suivant la revendication 18,
**caractérisée en ce que**
des éléments ( 19 ) à ressort sont disposés entre le un groupe de tirants ( 10 ) et le jonc ( 11 ) élastique tandis que l'autre groupe de tirants ( 9 ) est relié directement au jonc ( 11 ) élastique.

20. Section de blindage suivant la revendication 18 ou 19,
**caractérisée en ce que**
l'élément ( 19 ) à ressort comprend au moins un ressort à disque.

21. Section de blindage suivant la revendication 20,
**caractérisée en ce que**
l'élément ( 19 ) à ressort est constitué sous la forme d'un paquet de ressorts à disque.

22. suivant l'une des revendications 18 à 21,
**caractérisée en ce que**
le jonc ( 11 ) élastique a dans la direction de l'axe ( a ) une constante de ressort au moins trois fois aussi grande que l'élément ( 19 ) à ressort.

23. Section de blindage suivant la revendication 22,
**caractérisée en ce que**
le jonc ( 11 ) élastique est constitué sous la forme d'une pièce en acier pleine.

24. Section de blindage suivant l'une des revendications 1 à 23,
**caractérisée en ce que**
un isolant ( 17 ) est interposé entre les deux brides ( 4, 5 ) de raccordement au-delà de la bride ( 16 ) de fixation.

25. Section de blindage suivant l'une des revendications 1 à 24,
**caractérisée en ce que**
un élément ( 18 ) d'étanchéité est disposé entre l'élément ( 7 ) de compensation et la bride ( 4, 5 ) de raccordement ou la bride ( 16 ) de fixation de l'isolant ( 17 ).

26. Section de blindage suivant la revendication 25,
**caractérisée en ce que**
l'élément ( 18 ) d'étanchéité est un joint torique.
